# EUROPÄISCHE PATENTSCHRIFT

(11) **EP 1 986 912 B1**
(45) Veröffentlichungstag und Bekanntmachung des Hinweises auf die Patenterteilung: **08.12.2010**
(21) Anmeldenummer: 07711202.7
(22) Anmeldetag: 23.02.2007
(51) Int. Cl.: B64C 21/02, B64C 23/06, B64C 21/00

(54) **AERODYNAMISCHE KLAPPE EINES FLUGZEUGS MIT EINER DEN KLAPPENWIRBEL BEEINFLUSSENDEN VORRICHTUNG**
AERODYNAMIC FLAP OF AN AIRCRAFT WITH A DEVICE WHICH INFLUENCES THE FLAP TURBULENCE
VOLET AERODYNAMIQUE POUR AVION, DOTE D'UN DISPOSITIF AGISSANT SUR LES TOURBILLONS CRÉÉS PAR UN VOLET

(30) Priorität: 23.02.2006 DE 102006008434
(43) Veröffentlichungstag der Anmeldung: 05.11.2008
(73) Patentinhaber: Airbus Operations GmbH, 21129 Hamburg (DE)
(72) Erfinder: MAU, Knut, 22339 Hamburg (DE); GRÜNEWALD, Michael, 85635 Höhenkirchen (DE); REICHENBERGER, Johann, 83404 Ainring (DE); BORCHERS, Ingo, 88690 Uhldingen-Mühlhofen (DE); DROBIETZ, Roger, 88682 Salem (DE)
(74) Vertreter: Schatt, Markus F.
(86) Internationale Anmeldenummer: PCT/DE2007/000346
(87) Internationale Veröffentlichungsnummer: WO 2007/095931

(56) Entgegenhaltungen:
- EP-A1- 0 689 990
- EP-A1- 1 149 761
- WO-A-00/02775
- LU-A- 34 999
- US-B1- 6 283 406

## Beschreibung

Die Erfindung betrifft eine aerodynamische Klappe eines Flugzeugs und insbesondere eine Hochauftriebsklappe eines Flugzeugs mit einer den Klappenwirbel beeinflussenden Vorrichtung.

Die EP 1 149 761 A1 beschreibt Wirbelgeneratoren, die als längliche Elemente ausgebildet sind und die an einer Profilfläche einer Stellfläche angeordnet sind.

Die US 6 283 406 B1 offenbart ein Rotorblatt für Hubschrauber, das zur Wrbelbeeinflussung an einer ersten Längsseite Einlassöffnungen zum Einlassen von Luft und an einer entgegengesetzt zu der ersten Längsseite gelegenen zweiten Längsseite Auslassöffnungen zum Auslassen der Luft aufweist.

Die EP 0 689 990 A1 beschreibt ein Rotorblatt für Hubschrauber, das Auslassöffnungen und eine Vorrichtung zum Ausblasen von Luft durch diese Auslassöffnungen aufweist.

Moderne Verkehrsflugzeuge bedienen sich während der Start- und Landephase sogenannter Hochauftriebshilfen, um bei geringen Geschwindigkeiten den erforderlichen Auftrieb zu erzeugen. Diese Flugzeugkomponenten, unterteilt in Vorflügel und Landeklappen, sind neben den Fahrwerken die hauptsächlichen Erzeuger des Umströmungslärms von Verkehrsflugzeugen. Dieser Lärm kann während des Landeanflugs, wenn die Triebwerke stark gedrosselt sind, dieselbe Größenordnung erreichen, wie der der Motoren.

Umfangreiche Forschungsprogramme, sowohl in den USA als auch in Europa haben gezeigt, dass im Wesentlichen zwei Quellbereiche an die Hochauftriebhilfen für deren Lärmerzeugung verantwortlich sind: die Rückseite der Vorflügel und die Seitenkante der Landeklappe. Die Entstehung des Lärms in dem letztgenannten Quellbereich ist auf den Seitenkantenwirbel zurückzuführen, der durch die Umströmung der Seitenkante entsteht. Diese Umströmung hat ihre Ursache in der Druckdifferenz zwischen Ober- und Unterseite der Landeklappe. Aufgrund des relativ hohen Auslenkwinkels der Landeklappe kommt es sowohl an der oberen als auch an der unteren Kante der Seitenfläche zu Wirbelablösungen, die sich nach einer bestimmten Lauflänge zu einem großen Wirbel vereinen. Die Wechselwirkung dieses Wirbels mit der Oberfläche der Landeklappe führt dann zu der Lärmentstehung.

Aus der DE 100 20 177 A1 ist eine Vorrichtung zur Reduzierung des aerodynamisch induzierten Lärms an der Seitenkante einer Stellklappe, insbesondere einer Hochauftriebsklappe eines Flugzeugs bekannt, wobei an der Seitenkante der Stellklappe ein Wirbelgenerator durch eine Anzahl von sich in Spannweitenrichtung erstreckenden Elementen gebildet ist, zwischen denen an der Stellklappe vorbeifließende Luft strömt. Die sich in der Spannweitenrichtung erstreckenden Elemente sind länglich ausgebildet und in Form von bürstenähnlichen Anordnungen vorgesehen, die über einen oder mehrere Abschnitte der Profiltiefe der Stellklappe verlaufen.

Aus der WO 00/02775 A ist eine Hochauftriebsklappe an einem Flügel für große Flugzeuge bekannt, die quer zur Strömungsrichtung erstreckende Zacken aufweist, um die Wirbelschleppen des Flügels zu reduzieren.

Der Gegenstand dieser Veröttentlichung kommt mit dem Oberbegriff des unabhängigen Anspruchs 1 überein.

Weiterhin ist aus der US 3 596 854 ein Wirbelgenerator bekannt, welcher ein entlang der Seitenkante der Stellklappe verlaufendes röhrenförmiges Element mit einer sich zu der Rückseite der Stellklappe öffnenden Mündung umfasst, durch das an der Überdruckseite der Hochauftriebsklappe gesammelte Druckluft abgegeben wird. Der Drehsinn des Wirbels kann im Sinne einer Vergrößerung oder einer Verkleinerung der Auftriebskraft der Hochauftriebsklappe gewählt warden.

Die Aufgabe der Erfindung ist, eine aerodynamische Klappe eines Flugzeugs und insbesondere eine Hochauftriebsklappe oder Stellklappe eines Flugzeugs mit einer den Klappenwirbel beeinflussenden Vorrichtung zu schaffen, welche wirkungsvoll und mit geringem Aufwand realisierbar ist.

Diese Aufgabe wird mit den Merkmalen der unabhängigen Ansprüche gelöst. Weitere Ausführungsformen sind in den auf diese rückbezogenen Unteransprüchen angegeben.

Gemäß einem ersten Aspekt der Erfindung ist eine aerodynamische Klappe eines Flugzeugs und insbesondere Hochauftriebsklappe eines Flugzeugs mit einer den Klappenwirbel beeinflussenden Vorrichtung an zumindest einem Seitenrand der aerodynamischen Klappe vorgesehen,die insbesondere quer zur Strömungsrichtung der Luft erstreckende Elemente aufweist, an denen die die aerodynamischen Klappe umströmende Luft entlang strömt. Die sich quer zur Strömungsrichtung der Luft erstreckenden Elemente sind durch an dem Seitenrand der aerodynamischen Klappe ausgebildete Klappenteile der aerodynamischen Klappe realisiert, wobei sich zwischen den Klappenteilen ein oder mehrere Luftdurchlässe zur Durchströmung von die aerodynamische Klappe anströmender Luft befinden. Dabei weisen die sich quer zur Strömungsrichtung der Luft erstreckenden Klappenteile mindestens ein gegenüber der aerodynamischen Klappe bewegbares Klappensegment auf, wobei das Klappensegment derart bewegbar ist, dass es bei einer entsprechenden Bewegung zumindest einen Luftdurchlass freigibt, durch den die aerodynamische Klappe anströmende Luft von der Unterseite zu der Oberseite der aerodynamischen Klappe strömen kann.

Die sich quer zur Strömungsrichtung der Luft erstreckenden Klappenteile weisen mindestens ein gegenüber der aerodynamischen Klappe bewegbares Klappensegment auf, wobei das Klappensegment derart bewegbar ist, dass es bei einer entsprechenden Bewegung zumindest einen Luftdurchlass freigibt, durch den die aerodynamische Klappe anströmende Luft von der Unterseite zu der Oberseite der aerodynamischen Klappe strömen kann. Dabei kann eine mit der Klappe strukturell integrierte Lagerung und eine Stellvorrichtung sowie eine Kopplungsvorrichtung zur Kopplung der Stellvorrichtung mit dem bewegbaren Klappensegment vorgesehen sein, mit der gegenüber der aerodynamischen Klappe bewegbare Klappensegment bei seiner Bewegung an seiner stromaufwärtigen Seite von der aerodynamischen Klappe auf- oder wegklappbar ist und dabei einen Luftdurchlass zur Durchströmung von von der Unterseite der aerodynamischen Klappe zu deren Oberseite fließender Luft freigibt. Die Stellvorrichtung und/oder die Kopplungsvorrichtung können jeweils, jedoch müssen beide nicht integrale Teile der aerodynamischen Klappe sein.

Der Luftdurchlass kann derart ausgebildet sein, dass dieser eine die von der Unterseite der aerodynamischen Klappe zu deren Oberseite fließende Luft beschleunigende Düse bildet.

Das gegenüber der aerodynamischen Klappe bewegbare Klappensegment kann sich ungefähr über die Hälfte der Profiltiefe der aerodynamischen Klappe erstrecken. Auch kann die Länge des gegenüber der aerodynamischen Klappe bewegbaren Klappensegments in Strömungsrichtung der Luft gesehen zwischen 30 % und 70 % des Betrags der Profiltiefe oder der Länge des Seitenrands der aerodynamischen Klappe betragen.

Weiterhin kann ein Kopplungsmechanismus zur Kopplung des Stellmechanismus der aerodynamischen Klappe mit dem Stellmechanismus des bewegbaren Klappensegments zur Kopplung der Bewegung des bewegbaren Klappensegments mit der Bewegung der aerodynamischen Klappe vorgesehen sein.

Nach einem weiteren Aspekt der Erfindung ist eine aerodynamische Klappe eines Flugzeugs und insbesondere eine Hochauftriebsklappe eines Flugzeugs mit einer den Klappenwirbel beeinflussenden Vorrichtung an zumindest einem Seitenrand der aerodynamischen Klappe vorgesehen, wobei die den Klappenwirbel beeinflussende Vorrichtung aufweist: zumindest eine Vorrichtung zur Zuführung von Druckluft und zumindest einen an der Seitenkante der aerodynamischen Klappe ausmündenden und mit der zumindest einen Vorrichtung zur Zuführung von Druckluft in Verbindung stehenden Kanal zur Ausblasung von Druckluft in die Umgebung der aerodynamischen Klappe, wobei die durch den ausmündenden Kanal geblasene Druckluft durch Staudruck erzeugt und dem Kanal zum Ausblasen von Druckluft über eine Vorrichtung zur Zuführung von Druckluft zugeführt wird.

Dabei kann der ausmündende Kanal in der Profilfläche der Seitenkante ausmünden und/oder kann der ausmündende Kanal in einem Winkel zwischen 70 und 110 Grad zur Konturlinie der Seitenkante an der Ausmündungsstelle ausmüden.

Der ausmündende Kanal kann einen Anschluss zur Ankopplung des Flugzeugsystems aufweisen, so dass die durch den ausmündenden Kanal ausgeblasene Druckluft von einem Bleed-Air-System der Flugzeugtriebwerke zugeführt wird.

Insbesondere kann die den Klappenwirbel beeinflussende Vorrichtung zumindest einen in einem der Strömung zugewandten Bereich der aerodynamischen Klappe einmündenden Kanal und einen mit dem einmündenden Kanal in Verbindung stehenden und an der Seitenkante der aerodynamischen Klappe ausmündenden Kanal zur Durchströmung von die aerodynamische Klappe anströmender Luft aufweisen.

Nach der Erfindung ist somit insbesondere eine Vorrichtung zur Beeinflussung des Klappenwirbels einer aerodynamischen Klappe und insbesondere einer Hochauftriebsklappe eines Flugzeugs vorgesehen, wobei die den Klappenwirbel beeinflussende Vorrichtung zur Ausblasung von Druckluft in die Umgebung der aerodynamischen Klappe aufweist: zumindest eine Vorrichtung zur Zuführung von Druckluft und zumindest einen Ausmündungskanal zur Ausblasung von Druckluft in die Umgebung der aerodynamischen Klappe, der an der Seitenkante der aerodynamischen Klappe anbringbar ist, und ein Verbindungsteil zur Verbindung der Vorrichtung zur Zuführung von Druckluft mit dem Ausmündungskanal.

Dabei kann der ausmündende Kanal derart ausgebildet sein, dass dieser in einer aerodynamischen Klappe derart angeordnet werden kann, dass dieser in der Profilfläche der Seitenkante ausmündet.

Alternativ oder zusätzlich kann der ausmündende Kanal derart ausgebildet sein, dass dieser in einer aerodynamischen Klappe derart angeordnet werden kann, dass dieser in einem Winkel zwischen 70 und 110 Grad zur Konturlinie der Seitenkante an der Ausmündungsstelle ausmündet. Dabei kann der ausmündende Kanal einen Anschluss zur Ankopplung des Flugzeugsystems aufweisen, so dass die durch den ausmündenden Kanal ausgeblasene Druckluft von einem Bleed-Air-System der Flugzeugtriebwerke zuführbar ist.

Alternativ kann die Vorrichtung eine Druckluft-Zuführungsvorrichtung aufweisen, durch die die Druckluft zugeführt wird, die durch den an der Seitenkante der aerodynamischen Klappe ausmündenden Kanal geblasen werden kann.

Die den Klappenwirbel beeinflussende Vorrichtung kann aufweisen: zumindest einen Einmündungs-Kanal, der in einem der Strömung zugewandten Bereich der aerodynamischen Klappe angeordnet werden kann, und einen mit dem Einmündungs-Kanal in Verbindung stehenden und an der Seitenkante der aerodynamischen Klappe anbringbaren Ausmündungs-Kanal zur Durchströmung von die aerodynamische Klappe anströmender Luft. Im Folgenden werden Ausführungsbeispiele der Erfindung anhand der Zeichnung erläutert. Es zeigen:
Figur 1 eine den Klappenwirbel beeinflussende Vorrichtung und insbesondere eine Vorrichtung zur Reduzierung des aerodynamisch induzierten Lärms an der Seitenkante einer Stellklappe, insbesondere einer Hochauftriebsklappe eines Flugzeugs gemäß einem ersten Ausführungsbeispiel der Erfindung;
Figur 2 eine den Klappenwirbel beeinflussende Vorrichtung und insbesondere eine Vorrichtung zur Reduzierung des aerodynamisch induzierten Lärms an der Seitenkante einer Steltklappe insbesondere einer Hochauftriebsklappe eines Flugzeugs gemäß einem zweiten Ausführungsbeispiel der Erfindung,
Figur 3 eine den Klappenwirbel beeinflussende Vorrichtung und insbesondere eine Vorrichtung zur Reduzierung des aerodynamisch induzierten Lärms an der Seitenkante einer Stellklappe, insbesondere einer Hochauftriebsklappe eines Flugzeugs gemäß einem dritten Ausführungsbeispiel der Erfindung,

Nachfolgend werden verschiedene Lösungen erläutert, die insbesondere den von dem Seitenkantenwirbel ausgehenden Lärm reduzieren. Ein treibender Bewertungsfaktor für die technische Sinnfälligkeit solcher Modifikationen an der Landeklappe ist der maximale Auftrieb, der mit einer solchen Konfiguration erreicht werden kann.

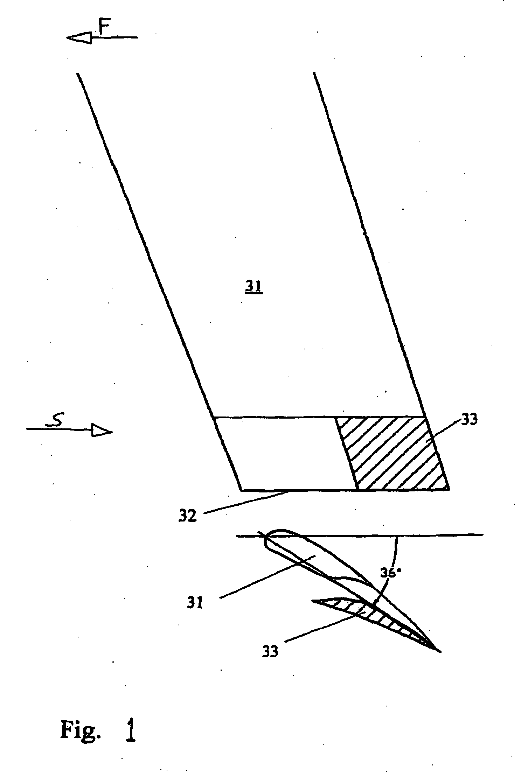

Die Figur 1 zeigen eine den Klappenwirbel beeinflussende Vorrichtung und insbesondere eine Vorrichtung zur Reduzierung des aerodynamisch induzierten Lärms an dem Seitenrand oder der Seitenkante einer Stellklappe und insbesondere einer Hochauftriebsklappe eines Flugzeugs gemäß einem ersten Ausführungsbeispiel der Erfindung. Die Vorrichtung dient der Beeinflussung des Klappenwirbels und insbesondere der Reduzierung des aerodynamisch induzierten Lärms an der Seitenkante 32 einer Stellklappe 31 und insbesondere einer Hochauftriebsklappe eines Flugzeugs. Die Stellklappe wird bei einer bestimmungsgemäßen Flugrichtung F des Flugzeugs von Luft in einer Strömungsrichtung S angeströmt. An dem Seitenrand oder der Seitenkante 32 der Stellklappe 31, d.h. dem seitlichen Verbindungsrand zwischen einem in Strömungsrichtung der Luft gesehen vorderen und hinteren Rand der Klappe, ist eine den Klappenwirbel beeinflussende Vorrichtung oder ein Wirbelgenerator mit sich quer oder winklig zur Strömungsrichtung der Luft oder sich in Spannweitenrichtung erstreckenden Elementen vorgesehen, zwischen denen an der Stellklappe 31 vorbei fließende Luft, d.h. ein Teil der die Klappe anströmenden Luft strömt.

Die sich quer zur Strömungsrichtung oder in Spannweitenrichtung erstreckenden Elemente sind als Flächenteile 31, 33 der Stellklappe 31 ausgebildet, die einen oder mehrere zwischen den Flächenteilen befindliche Luftdurchlässe bilden, die von der die Stellklappe 31 anströmenden Luft durchströmt werden.

Bei dem in Figur 1 gezeigten ersten Ausführungsbeispiel ist von den sich quer zur Strömungsrichtung oder in Spannweitenrichtung erstreckenden Klappenteilen zumindest eines als ein gegenüber der aerodynamischen Klappe 31 bewegbares Klappensegment oder Flächensegment 33 ausgebildet. Dabei kann insbesondere vorgesehen sein, dass an der aerodynamischen Klappe 31 zumindest in Strömungsrichtung S gesehen vor dem zumindest einen bewegbaren Klappensegment 33 ein weiteres, mit der Klappe 31 fest oder starr verbundenes Klappensegment 32 angeordnet ist. Dabei kann zusätzlich auch hinter dem bewegbaren Klappensegment 33 das zumindest eine weitere Klappensegment 32 angeordnet sein. Auch kann das weitere Klappensegment 32 sowohl vor als auch hinter dem bewegbaren Klappensegment 33 angeordnet sein. Bei dem Vorhandensein mehrerer bewegbarer Klappensegmente 33 kann, jedoch muss nicht jeweils eines der weiteren Klappensegmente 32 angeordnet sein. Das bewegbare Klappensegment 33 gibt nach Ausführung seiner oder bei seiner Offnungs-Bewegung einen Luftdurchlass frei, durch den ein Teil der die Klappe bestimmungsgemäß anströmenden Luft von der Unterseite eines in Strömungsrichtung der Luft gesehen relativ ersten Bereichs der Klappe 31 zu der Oberseite eines relativ zum ersten Bereich hinteren zweiten Bereichs der Klappe 31 fließt. Die Öffnungs-Bewegung ist dabei eine Stellbewegung, die von einer Ausgangsstellung ausgeht, bei der die jeweils benachbarten Ränder des jeweils benachbarten bewegbaren Klappensegments und des vor diesem angeordneten weiteren Klappensegments 32 derart gelegen sind, dass kein Luftdurchlass ausgebildet ist, und in einer Stellung fährt, bei der die jeweils benachbarten Ränder der Klappensegmente 33, 32 derart voneinander entfernt liegen, dass sich ein Luftdurchlass zwischen dem vorderen und dem bewegbaren hinteren Klappensegment 32 bzw. 33 ausbildet. Das bedeutet, dass das gegenüber der Klappe oder Stellklappe 31 bewegbare Klappensegment 33 ist bei seiner Öffnungs-Bewegung an seiner stromaufwärtigen, d.h. der Strömung zugewandten Seite relativ zu der Klappe 31 bzw. dem weiteren Klappensegment 32 nach unten, also zur Überdruckseite des Profils der aerodynamischen Klappe 31 wegklappbar und gibt dabei den durch die von der Unterseite der Klappe 31 zu deren Oberseite fließende Luft durchströmten Luftdurchlass frei. Der Luftdurchlass bildet eine die von der Unterseite der Stellklappe 31 zu deren Oberseite fließende Luft beschleunigende Düse. Die Sogwirkung dieser beschleunigten Strömung verhindert die Wechselwirkung des Seitenkantenwirbels mit der Oberfläche der Landeklappe 31, wodurch der Mechanismus der Lärmentstehung unterbunden ist.

Bei einer Anordnung von mehreren bewegbaren Klappensegmenten und/oder mehreren weiteren, starr an der Klappe 31 angebrachten Klappensegmenten 32 ist das jeweils hintere Klappensegment 33 gegenüber einem vorderen Klappensegmente 32 bewegbar angeordnet.

Das gegenüber der aerodynamischen Klappe 31 bewegbare Klappensegment 33 erstreckt sich in Strömungsrichtung vorzugsweise in Strömungsrichtung gesehen zwischen 30 und 70% des Betrags der Profiltiefe der Klappe 31. Auch kann sich das Klappensegment 33 ungefähr über die Hälfte +/- 20% der Profiltiefe der Stellklappe 31 erstrecken, wobei hinter dem bewegbaren Klappensegment 33 ein weiteres, starr an der Klappe 31 angebrachtes Klappensegment angeordnet sein kann, d.h. dass das bewegbare Klappensegment 33 auch etwa mittig an der Klappe 31 angeordnet ist. Das bewegbare Flächensegment 33 kann zur Bewegung mit dem Stellmechanismus der Stellklappe 31 gekoppelt sein.

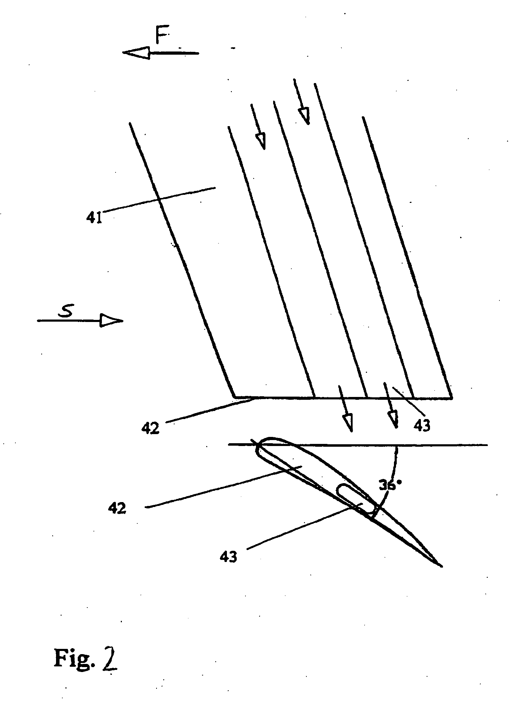

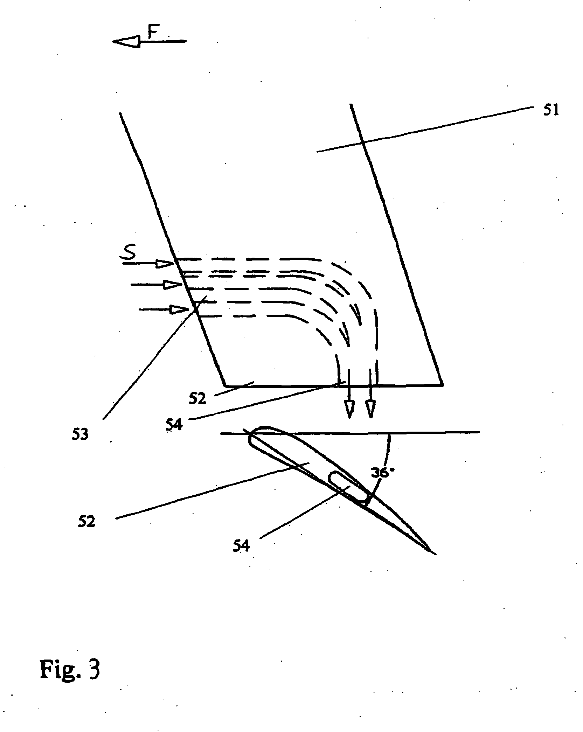

Die Figuren 2 und 3 zeigen eine Vorrichtung zur Beeinflussung des Klappenwirbels oder zur Reduzierung des aerodynamisch induzierten Lärms an der Seitenkante einer Stellklappe, insbesondere einer Hochauftriebsklappe eines Flugzeugs gemäß einem zweiten und einem dritten Ausführungsbeispiel der Erfindung. An der Seitenkante 42; 52 einer Stellklappe 41; 51, insbesondere einer Hochauftriebsklappe eines Flugzeugs ist eine den aerodynamisch induzierten Lärm reduzierender den Klappenwirbel beeinflussende Vorrichtung vorgesehen, der zumindest einen an der Seitenkante 42; 52 der Stellklappe 41; 51 mündenden Kanal 43; 54 umfasst, durch den durch ein Flugzeugsystem oder die Strömung erzeugte Druckluft in den lärmerzeugenden Wirbel einblasbar ist. Der Kanal 43; 54 mündet quer zur Strömungsrichtung er Luft oder im Wesentlichen senkrecht zur Seitenkante 42; 52 in der Profilfläche der Stellklappe 41; 51.

Bei dem in Figur 2 gezeigten zweiten Ausführungsbeispiel der Erfindung wird die durch die an der Seitenkante 42 der Stellklappe 41 mündenden Kanäle 43 geblasene Druckluft durch ein Bleed-Air-System der Flugzeugtriebwerke erzeugt.

Bei dem in Figur 3 gezeigten dritten Ausführungsbeispiel der Erfindung wird die durch den an der Seitenkante 52 der Stellklappe 51 mündenden Kanal 54 geblasene Druckluft durch Staudruck erzeugt. Die durch Staudruck erzeugte Druckluft wird durch einen Kanal 53 von der Vorderseite der Stellklappe 51 abgezapft und durch ein Rohrsystem zu der Seitenkante 52 der Landeklappe 51 geführt.

Durch das Ausblasen aus der Seiten- und/oder Oberfläche der Landeklappe 41; 51 werden drei Effekte zur Lärmreduzierung erzielt: einerseits kann der Seitenkantenwirbel von der Landeklappe weggespült und somit der Wechselwirkungsmechanismus der Lärmentstehung unterbunden werden, andererseits ist es möglich die Wirbelstärke durch Injektion von Luft in den Wirbelkern soweit zu verringern, dass es zu keiner signifikanten Schallabstrahlung kommt. Der dritte Effekt beruht darauf, dass die aus der Seitenfläche 42; 52 austretenden Luftstrahlen zur Entstehung kleinerer Wirbetgebiete führen.

Die vorstehend erläuterten Lösungen verstehen sich nicht ausschließlich als Möglichkeiten der Lärmreduzierung, sondern zielen ebenfalls auf eine Steigerung des Auftriebs ab. Als Konsequenz hieraus könnte die Landegeschwindigkeit von Verkehrsflugzeugen verringert werden, was sich nicht nur auf die Lärmentwicklung positiv auswirken würde. Auch kann durch die erfindungsgemäßen Lösungen die Flugstabilität verbessert werden.

## Patentansprüche

1. Aerodynamische Klappe (31) eines Flugzeugs, mit einer den Klappenwirbel beeinflussenden Vorrichtung an zumindest einem Seitenrand (32) der aerodynamischen Klappe (31), die sich quer zur Strömungsrichtung der Luft erstreckende Elemente aufweist, an denen die die aerodynamischen Klappe (31) umströmende Luft entlang strömt,
wobei die sich quer zur Strömungsrichtung der Luft erstreckenden Elemente an dem Seitenrand der aerodynamischen Klappe (31) ausgebildete Klappenteile (32 33) sind, die derart gestaltet sind, dass zwischen diesen Klappenteilen (32, 33) ein oder mehrere Luftdurchlässe zur Durchströmung von die aerodynamische Klappe ( 31) anströmender Luft ausgebildet sind,
**dadurch gekennzeichnet, dass**
die sich quer zur Strömungsrichtung der Luft erstreckenden Klappenteile (32,33) mindestens ein gegenüber der aerodynamischen Klappe (31) bewegbares Klappensegment (33) aufweisen, wobei das Klappensegment (33) derart bewegbar ist, dass es bei einer entsprechenden Bewegung zumindest einen Luftdurchlass freigibt, durch den die aerodynamische Klappe (31) anströmende Luft von der Unterseite zu der Oberseite der aerodynamischen Klappe (31) strömen kann.

2. Aerodynamische Klappe (31) nach Anspruch 1, **dadurch gekennzeichnet, dass** das gegenüber der aerodynamischen Klappe (31) bewegbare Klappensegment (33) bei seiner Bewegung an seiner stromaufwärtigen Seite von der aerodynamischen Klappe (31) wegklappbar ist und dabei einen Luftdurchlass zur Durchströmung von der Unterseite der aerodynamischen Klappe (31) zu deren Oberseite fließender Luft freigibt.

3. Aerodynamische Klappe (31) nach Anspruch 2, **dadurch gekennzeichnet, dass** der Luftdurchlass eine die von der Unterseite der aerodynamischen Klappe (31) zu deren Oberseite fließende Luft beschleunigende Düse bildet.

4. Aerodynamische Klappe (31) nach Anspruch 1, 2 oder 3, **dadurch gekennzeichnet, dass** die Länge des gegenüber der aerodynamischen Klappe (31) bewegbaren Klappensegments (33) in Strömungsrichtung der Luft gesehen zwischen 30 % und 70 % der Länge des Seitenrands der aerodynamischen Klappe (31) beträgt.

5. Aerodynamische Klappe (31) nach Anspruch 4, **dadurch gekennzeichnet, dass** die Länge des gegenüber der aerodynamischen Klappe (31) bewegbaren Klappensegments (33) in Strömungsrichtung der Luft gesehen zwischen 30 % und 70 % des Betrags der Profiltiefe der aerodynamischen Klappe (31) beträgt.

6. Aerodynamische Klappe (31) nach einem der Ansprüche 1 bis 5, **dadurch gekennzeichnet, dass** ein Kopplungsmechanismus zur Kopplung des Stellmechanismus der aerodynamischen Klappe (31) mit dem Stellmechanismus des bewegbaren Klappensegments (33) zur Kopplung der Bewegung des bewegbaren Klappensegments (33) mit der Bewegung der aerodynamischen Klappe (31) vorgesehen ist.

7. Aerodynamische Klappe (41; 51) eines Flugzeugs, mit einer den Klappenwirbel beeinflussenden Vorrichtung an zumindest einem Seitenrand (32) der aerodynamischen Klappe (41; 51),
**dadurch gekennzeichnet, dass** die den Klappenwirbel beeinflussende Vorrichtung aufweist: zumindest einen an der Seitenkante (42; 52) der aerodynamischen Klappe (41; 51) ausmündenden Kanal (43; 54) zum Ausblasen von Druckluft in die Umgebung der aerodynamischen Klappe (41; 51), wobei die durch den ausmündenden Kanal (54) geblasene Druckluft durch Staudruck erzeugt und dem Kanal (43; 54) zum Ausblasen von Druckluft über eine Vorrichtung zur Zuführung von Druckluft zugeführt wird.

8. Aerodynamische Klappe (41; 51) nach Anspruch 7, **dadurch gekennzeichnet, dass** der ausmündende Kanal (43; 54) in der Profilfläche der Seitenkante (42; 52) ausmündet.

9. Aerodynamische Klappe ( 41; 51) nach Anspruch 7 oder 8, **dadurch gekennzeichnet, dass** der ausmündende Kanal (43; 54) in einem Winkel zwischen 70 und 110 Grad zur Konturlinie der Seitenkante (42; 52) an der Ausmündungsstelle ausmündet.

10. Aerodynamische Klappe (41; 51) nach einem der Ansprüche 7 bis 9, **dadurch gekennzeichnet, dass** die Vorrichtung zur Zuführung von Druckluft der den Klappenwirbel beeinflussenden Vorrichtung aufweist: zumindest einen in einem der Strömung zugewandten Bereich der aerodynamischen Klappe (51) einmündenden Kanal (53), der mit dem an der Seitenkante (42; 52) der aerodynamischen Klappe (41; 51) ausmündenden Kanal (43; 54) in Verbindung steht, so dass mit diesem ein Ausblasen von die aerodynamischen Klappe (41; 51) anströmender Luft erfolgt.

11. Aerodynamische Klappe (41; 51) nach Anspruch 7, 8 oder 9, **dadurch gekennzeichnet, dass** die Vorrichtung zur Zuführung von Druckluft durch einen Anschluss zur Ankopplung des Flugzeugsystems gebildet ist, so dass die durch den ausmündenden Kanal (43; 54) ausgeblasene Druckluft von einem Bleed-Air-System der Flugzeugtriebwerke zugeführt wird.

## Claims

1. An aerodynamic flap (31) of an aircraft with a device that influences the flap vortex on at least one lateral edge (32) of the aerodynamic flap (31), which device comprises elements that extend across the direction of flow of the air, along which elements the air that flows around the aerodynamic flap (31) flows,
wherein the elements that extend across the direction of flow of the air are flap components (32, 33) on the lateral edge of the aerodynamic flap (31) that are designed in such a manner that between these flap components (32, 33) one or several air passages are designed so that air that flows against the aerodynamic flap (31) passes through it or them,
**characterised in that** the flap components (32, 33) that extend across the direction of flow of the air comprise at least one flap segment (33) that is movable relative to the aerodynamic flap (31), wherein the flap segment (33) is movable in such a manner that in a corresponding movement it releases at least one air passage through which the air flowing against the aerodynamic flap (31) can flow from the bottom to the top of the aerodynamic flap (31).

2. The aerodynamic flap (31) according to claim 1, **characterised in that** the flap segment (33) that is movable relative to the aerodynamic flap (31), when moved, can be folded away, on its upstream edge, from the aerodynamic flap (31) and in so doing opens an air passage for the flow-through of air flowing from the bottom of the aerodynamic flap (31) to its top.

3. The aerodynamic flap (31) according to claim 2, **characterised in that** the air passage forms a nozzle that accelerates the air flowing from the bottom of the aerodynamic flap (31) to its top.

4. The aerodynamic flap (31) according to claim 1, 2 or 3, **characterised in that** the length of the flap segment (33) that is movable relative to the aerodynamic flap (31), when viewed in the direction of airflow, comprises between 30% and 70% of the length of the lateral edge of the aerodynamic flap (31).

5. The aerodynamic flap (31) according to claim 4, **characterised in that** the length of the flap segment (33) that is movable relative to the aerodynamic flap (31), when viewed in the direction of airflow, comprises between 30% and 70% of the amount of the profile depth of the aerodynamic flap (31).

6. The aerodynamic flap (31) according to any one of claims 1 to 5, **characterised in that** a coupling mechanism for coupling the actuating mechanism of the aerodynamic flap (31) is provided with the actuating mechanism of the movable flap segment (33) for coupling the movement of the movable flap segment (33) with the movement of the aerodynamic flap (31).

7. An aerodynamic flap (41; 51) of an aircraft, with a device that influences the flap vortex on at least one lateral edge (32) of the aerodynamic flap (41; 51),
**characterised in that** the device influencing the flap vortex comprises: at least one duct (43; 54) opening out on the lateral edge (42; 52) of the aerodynamic flap (41; 51) for blowing compressed air out into the surroundings of the aerodynamic flap (41; 51), wherein the air blown through the opening-out duct (54) is generated by dynamic pressure and is fed to the duct (43; 54) for blowing out compressed air by way of a device for feeding compressed air.

8. The aerodynamic flap (41; 51) according to claim 7, **characterised in that** the opening-out duct (43; 54) leads out in the profile surface of the lateral edge (42; 52).

9. The aerodynamic flap (41; 51) according to claim 7 or 8, **characterised in that** the opening-out duct (43; 54) leads out at an angle of between 70 and 110 degrees to the contour line of the lateral edge (42; 52) at the leading-out location.

10. The aerodynamic flap (41; 51) according to any one of claims 7 to 9, **characterised in that** the device for feeding compressed air to the device influencing the flap vortex comprises: at least one duct (53), leading into the region of the aerodynamic flap (51) which region faces the flow, which duct (53) communicates with the duct (43; 54) that opens out on the lateral edge (42; 52) of the aerodynamic flap (41; 51), so that, with the aforesaid, blowing out of the air flowing against the aerodynamic flap (41; 51) occurs.

11. The aerodynamic flap (41; 51) according to claim 7, 8 or 9, **characterised in that** the device for feeding compressed air is formed by a connection for coupling the aircraft system so that the compressed air blown out through the opening-out duct (43; 54) is fed to the aircraft engines by a bleed air system.

## Revendications

1. Volet aérodynamique (31) d'avion comprenant un dispositif influençant le tourbillon du volet sur au moins un bord latéral (32) du volet aérodynamique (31), qui présente des éléments s'étendant transversalement au sens d'écoulement de l'air, le long desquels l'air entourant le volet aérodynamique (31) s'écoule,
sachant que les éléments s'étendant transversalement au sens d'écoulement de l'air sont des parties de volet (32, 33) formées sur le bord latéral du volet aérodynamique (31) qui sont ainsi formées qu'entre ces parties de volet (32, 33), un ou plusieurs passage(s) d'air est/sont formé(s) pour faire traverser l'air arrivant sur le volet aérodynamique (31),
**caractérisé en ce que** les parties de volet (32, 33) s'étendant transversalement au sens d'écoulement de l'air présentent au moins un segment de volet (33) mobile par rapport au volet aérodynamique (31), sachant que le segment de volet (33) est ainsi mobile qu'il dégage lors d'un mouvement correspondant au moins un passage d'air par lequel l'air arrivant sur le volet aérodynamique (31) peut s'écouler depuis la face inférieure vers la face supérieure du volet aérodynamique (31).

2. Volet aérodynamique (31) selon la revendication 1, **caractérisé en ce que** le segment de volet (33) mobile par rapport au volet aérodynamique (31), lors de son déplacement sur son côté en amont de l'écoulement, peut être tourné à l'écart du volet aérodynamique (31) et dégage ainsi un passage d'air pour que l'air traverse de la face inférieure du volet aérodynamique (31) vers sa face supérieure.

3. Volet aérodynamique (31) selon la revendication 2, **caractérisé en ce que** le passage d'air forme une buse accélérant l'air passant de la face inférieure du volet aérodynamique (31) vers sa face supérieure.

4. Volet aérodynamique (31) selon la revendication 1, 2 ou 3, **caractérisé en ce que** la longueur du segment de volet (33) mobile par rapport au volet aérodynamique (31) fait entre 30 % et 70% de la longueur du bord latéral du volet aérodynamique (31), vu dans le sens d'écoulement de l'air.

5. Volet aérodynamique (31) selon la revendication 4, **caractérisé en ce que** la longueur du segment de volet (33) mobile par rapport au volet aérodynamique (31), fait entre 30 % et 70% du montant de la profondeur de profil du volet aérodynamique (31), vu dans le sens d'écoulement de l'air.

6. Volet aérodynamique (31) selon l'une des revendications 1 à 5, **caractérisé en ce qu'**un mécanisme de réglage est prévu pour coupler le mécanisme de réglage du volet aérodynamique (31) avec le mécanisme de couplage du segment de volet (33) mobile pour coupler le mouvement du segment de volet (33) mobile avec le mouvement du volet aérodynamique (31).

7. Volet aérodynamique (41; 51) d'avion comprenant un dispositif influençant le tourbillon du volet sur au moins un bord latéral (32) du volet aérodynamique (41; 51),
**caractérisé en ce que** le dispositif influençant le tourbillon du volet présente : au moins un canal débouchant (43; 54) sur le bord latéral (42; 52) du volet aérodynamique (41; 51) pour souffler de l'air comprimé dans l'environnement du volet aérodynamique (41; 51), sachant que l'air comprimé soufflé à travers le canal débouchant (54) est produit par de la pression dynamique et est alimenté vers le canal (43; 54) pour souffler de l'air comprimé par un dispositif d'alimentation en air comprimé.

8. Volet aérodynamique (41; 51) selon la revendication 7, **caractérisé en ce que** le canal débouchant (43; 54) débouche dans la surface profilée du bord latéral (42; 52).

9. Volet aérodynamique (41; 51) selon la revendication 7 ou 8, **caractérisé en ce que** le canal débouchant (43; 54) débouche dans un angle entre 70 et 110 degrés par rapport à la ligne de contour du bord latéral (42; 52) sur le point de débouchement.

10. Volet aérodynamique (41; 51) selon l'une des revendications 7 à 9, **caractérisé en ce que** le dispositif d'alimentation en air comprimé du dispositif influençant le tourbillon du volet présente : au moins un canal embouchant (53) dans une zone tournée vers l'écoulement du volet aérodynamique (51) qui est en liaison avec le canal débouchant (43; 54) sur l'arête latérale (42; 52) du volet aérodynamique (41; 51), de façon à ce qu'avec celui-ci l'air arrivant sur le volet aérodynamique (41; 51) soit soufflé.

11. Volet aérodynamique (41; 51) selon la revendication 7, 8 ou 9, **caractérisé en ce que** le dispositif d'alimentation en air comprimé est formé par un raccordement destiné à coupler le système de l'avion, de façon à ce que l'air soufflé par le canal débouchant (43; 54) soit alimenté par un système bleed-air du réacteur de l'avion.
